Europäisches Patentamt

European Patent Office

Office européen des brevets

(11) Publication number : **0 372 209 B1**

(12) **EUROPEAN PATENT SPECIFICATION**

(45) Date of publication of patent specification :
03.06.92 Bulletin 92/23

(51) Int. Cl.⁵ : **G01B 11/04**

(21) Application number : **89119762.6**

(22) Date of filing : **24.10.89**

(54) **Length measuring apparatus.**

(30) Priority : **24.10.88 JP 267675/88**

(43) Date of publication of application :
**13.06.90 Bulletin 90/24**

(45) Publication of the grant of the patent :
**03.06.92 Bulletin 92/23**

(84) Designated Contracting States :
**DE NL**

(56) References cited :
**EP-A- 0 110 146**
**DE-A- 3 543 993**
**US-A- 3 621 266**

(73) Proprietor : **FUJI PHOTO FILM CO., LTD.**
**210 Nakanuma Minami Ashigara-shi**
**Kanagawa (JP)**

(72) Inventor : **Shimano, Masami c/o Fuji Photo**
**Film Co.,Ltd.**
**No. 4000 Kawajiri, Yoshida-cho**
**Kanbara-gun, Shizuoka (JP)**
Inventor : **Sano, Atsuhiro c/o Fuji Photo Film**
**Co., Ltd.**
**No. 4000 Kawajiri, Yoshida-cho**
**Kanbara-gun, Shizuoka (JP)**

(74) Representative : **Patentanwälte Grünecker,**
**Kinkeldey, Stockmair & Partner**
**Maximilianstrasse 58**
**W-8000 München 22 (DE)**

## Description

### Background of the Invention

The present invention relates to a measuring apparatus, and more particularly to a measuring apparatus for measuring the length of a sheet.

Measuring apparatus for measuring the size or the squareness of a rectangular or square sheet are known in various kinds. One kind of such a measuring apparatus is known from, for example, Japanese Patent Publication No. 60-57003. The measuring apparatus described in the publication consists of four optical angle sensors for detecting corner angles of the sheet and an arithmetic circuit for culculating not only the differences between actual lengths and reference lengths for the four sides of the sheet based on the detected corner angles but also the squareness of the sheet. To place the sheet accurately on a measuring table, two guide rollers are disposed along two sides of the measuring table perpendicular to each other.

Another kind of such a measuring apparatus is known from US-A-3 621 266 which comprises the features defined in the preamble of Claim 1.

Another kind of such a measuring apparatus is known from Japanese Unexamined Patent Publication No. 58-191,908. The measuring apparatus described in the publication consists of two cameras having photodiode arrays to detect front and rear sides of a sheet in synchronism with each other. To improve the accuracy of measurement, it is adapted to collect or pickup data from the cameras at a timing that the difference between timings at which the cameras detect the front and rear sides of the sheet, respectively, becomes the smallest.

The sheet is usually cut from a long web of sheet material by means of a shearing or cutting machine. One kind of such a cutting machine is known from Japanese Unexamined Patent Publication No. 60-155,314. The cutting machine described in the publication includes scanning cameras as a web position correcting means, which is located before a position where the long web is cut to sheets, for measuring both sides of a long web running at a constant speed to correctively position the web in the cutting position.

There are, however, various disadvantages or problems in association with the above described apparatus. That is, the measuring apparatus described in Japanese Patent Publication No. 60-57003 has the problem of setting a sheet on the measuring table which requires stopping a sheet conveying system for a while. The apparatus is inconvenient in measuring sheets separately one by one. A problem in the measuring apparatus described in Japanese Unexamined Patent Publication No. 58-191908 is the difficulty of accurate measurement when a sheet runs with an inclination with respect to the direction of running. Even in the Japanese Unexamined Patent Publication No. 60-155314, there is the difficulty of accurate measurement because of the variations in sheet lengths.

### Object of the Invention

It is, therefore, an object of the present invention to provide a sheet measuring apparatus which performs accurate measurement while a conveyer system for sheets continuously operates.

### Summary of the Invention

The above object of the present invention is achieved by providing a sheet length measuring apparatus comprising front and rear edge detecting means for detecting front and rear edge of a sheet moving at a constant speed in a predetermined direction to output front and rear edge signals, respectively, and a means for detecting an inclination of the sheet relative to the predetermined direction to output an inclination angle signal representative of the inclination. An arithmetic means operates to calculate an apparent length of the sheet in the direction based on the front and rear edge signals and to correct the apparent length of the sheet with the inclination angle signal, thereby determining an actual length of the sheet.

In accordance with the present invention, because of detecting an inclination angle of a sheet relative to a predetermined direction in which the sheet moves at a constant speed following to detecting an apparent length of a sheet in the predetermined sheet, it is possible to calculate an actual length of the sheet during the movement of the sheet. This makes it possible to effect a real time decision whether the sheet is standard or substandard.

### Brief Description of the Drawings

The above and other objects and features of the present invention will be apparent from following description of a preferred embodiment when taken in conjunction with the appended drawings in which:

Figure 1 is a perspective view of a length measuring apparatus in accordance with a preferred embodiment of the present invention;

Figure 2 is an explanatory plan view of edge detecting means of the length measuring apparatus shown in Fig. 1;

Figure 3 is a block diagram showing a circuit incorporated in the length measuring apparatus shown in Fig. 1;

Figure 4 is an explanatory view showing an arrangement of an angle detecting means of the length measuring apparatus for detecting an angle of inclination of a sheet to be measured; and

Figure 5 is an explanatory view showing the function of a counter unit used in the circuit of Fig. 3.

## Detailed Description of the Invention

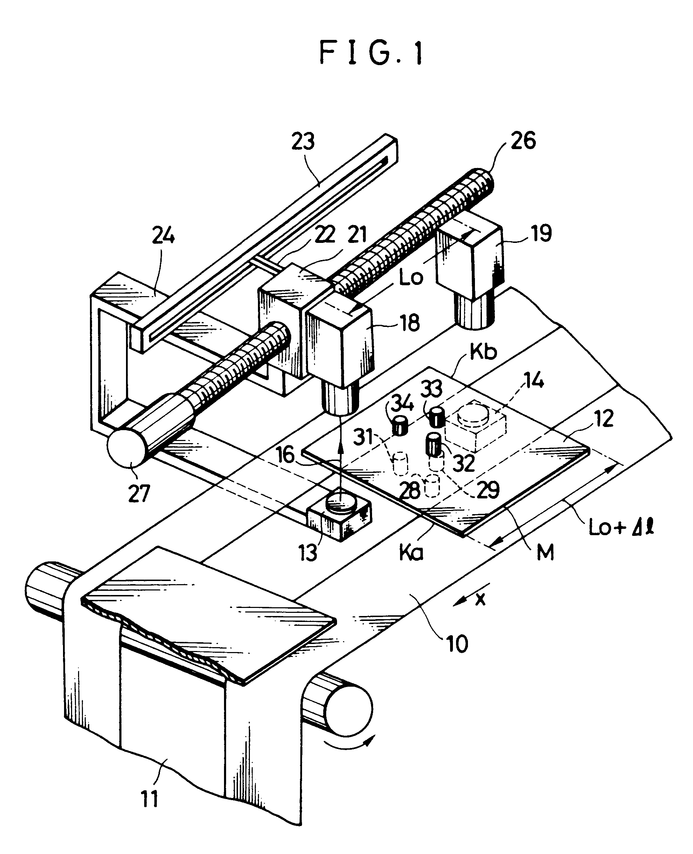

Referring to the drawings in detail, in particular to Fig. 1, a sheet measuring apparatus 1 in accordance with a preferred embodiment of the present invention is shown, having a conveyer belt 10 provided with a transparent belt section 10a centrally extending in a lengthwise direction in which the conveyer belt 10 moves. The conveyer belt 10, which is moved in a direction shown by an arrow X at a constant speed by a rotating roller 11 driven by a motor (not shown), conveys sheets 12 placed thereon. Sheets 12 are made by cutting a long web having a certain width to a desired sheet length $L_0$ by means of a web cutting apparatus (not shown) which may take any type well known in the art. An actual sheet length L of the sheet 12 cut aiming at the desired length $L_0$ often includes a cutting error $\delta_1$ in length and given by the following equation:

$$L = L_0 + \delta_1$$

If the cutting error $\delta_1$ is not within an allowable range, the sheet should be eliminated as substandard.

Under the transparent belt section 10a of the conveyer belt 10, there are two light source units 13 and 14 for providing diffused illumination light. The diffused light from the light source units 13 and 14 are received by line scanning cameras (which are referred simply to as upstream side and downstream side scanning cameras) 18 and 19 disposed above the transparent belt section 10a of the conveyer belt 10, respectively. Each scanning camera 18, 19, which includes a CCD sensor with a pixel array arranged in the same lengthwise direction X as the conveyer belt 10, receives the light from the light source unit 13, 14, thereby detecting front and rear edges $K_a$ and $K_b$ of the sheet 12 passing thereunder.

A distance between the upstream side downstream side cameras 18 and 19, and also between the light source units 13 and 14, is adjusted according to a desired sheet length $L_0$ for sheet to be measured by means of a distance adjusting mechanism 20. That is, the distance adjusting mechanism 20 includes a generally U-shaped arm 24 having a support block 21 formed with a hole having female threads at one end thereof which is supported by a threaded rotatable rod 26 for movement in the lengthwise direction X. One of the upstream side and downstream side cameras, for example the downstream side scanning camera 18, is attached to the support block 21 and the corresponding light source 13 is mounted on the other end of the U-shaped arm 24. The threaded rotatable rod 26 is operationally coupled to a motor driven rotary device 27 so as to be rotated in both directions, thereby displacing the downstream side scanning camera 18 and the light source unit 13 supported by the U-shaped arm 24 in the lengthwise direction. The support block 21 is associated with a camera position sensor 23 through a signaling lever 22 attached thereto.

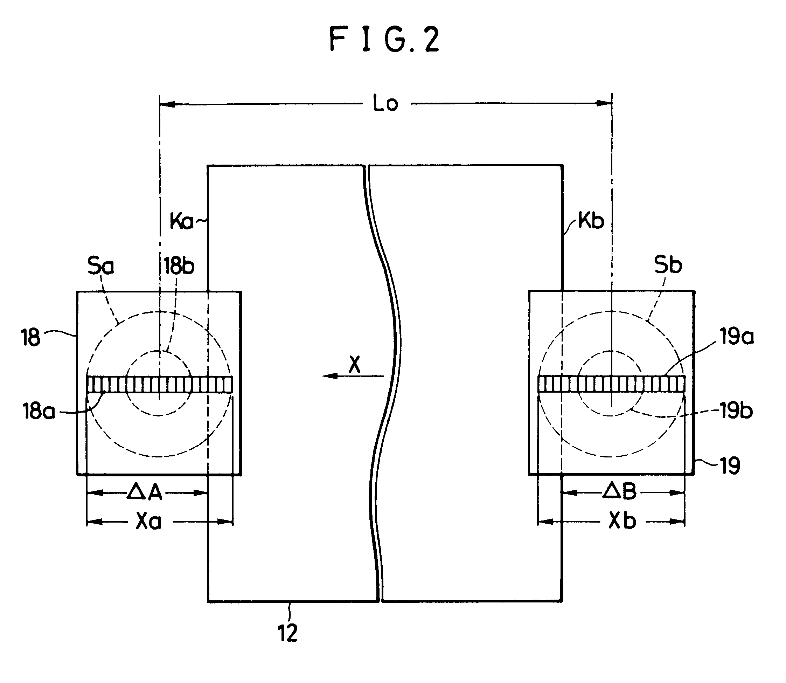

As shown in Fig. 2, the upstream side and downstream side scanning camera 18 and 19, which have the fields of view $S_a$ and $S_b$ in the lengthwise direction, respectively, are provided with CCD arrays 18a and 19a disposed in their focal planes. Each CCD array 18a, 19a has a line arrangement of a number $X_a$, $X_b$ of pixels. Because each pixel provides digital signals, namely a logic "1" when receiving light or a logic "0" when receiving no light, the upstream side and downstream side scanning cameras 18 and 19 provide $X_a$-bit data and $X_b$-bit data.

If the sheet 12 is placed partly over some pixels of the both CCD arrays 18a and 19a as shown in Fig. 2, the pixels covered by the sheet 12 provides signals of logic "0" and the remaining pixels signals of logic "1". As the sheet moves in the lengthwise direction, the CCD array 19a increasingly changes the number of $\Delta B$ of pixels that provide the signal of logic "1" and on the other hand, the CCD array 18a decreasingly changes the number of $\Delta A$ of pixels that provide the signal of logic "1".

Between the light source units 13 and 14, there are three light emitting elements 28-30 arranged in a triangle formation under the transparent belt section 10a and three light receiving elements 31-33 positionally corresponding to the light emitting elements 28-30 above the transparent belt section 10a. These light emitting elements 28-30 and light receiving elements 31-33 form an angle sensor for detecting the inclination of a center line of the sheet 12 placed on the conveyer belt 10 with respect to the lengthwise direction. For accurate detection, the light emitting element 29 and the light receiving element 33 are exactly, correspondingly located along a center line $X_L$ of the transparent belt section 10 of the conveyer belt 10, and the light emitting elements 28

EP 0 372 209 B1

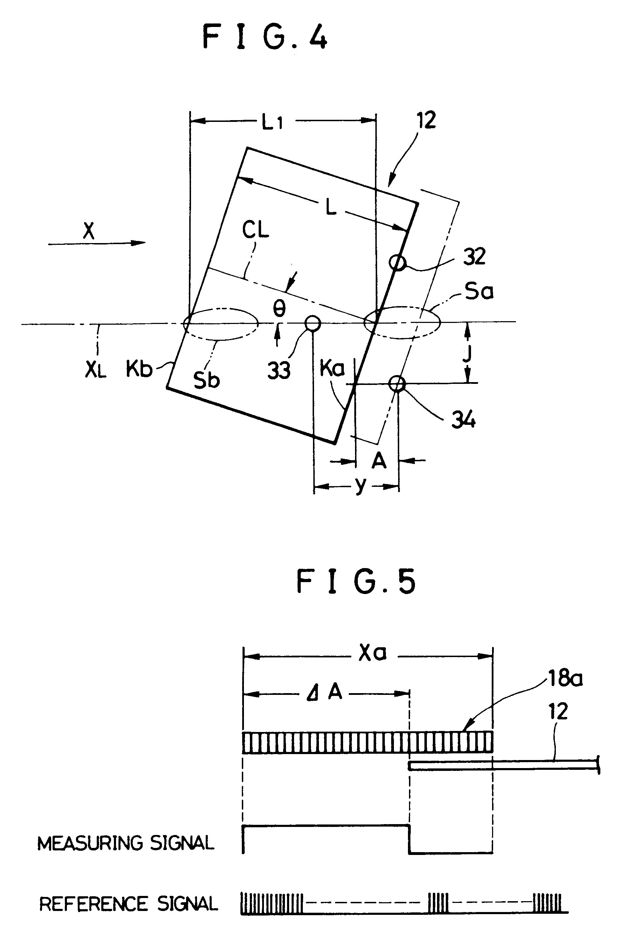

and 30 and the light receiving element 32 and 34 are also exactly, correspondingly located on both side of the center line $X_L$ parallel to the lengthwise direction X and crossing the light receiving element 33 at a distance J from the center line $X_L$ and at the distance Y from the elements 29 and 33 in the lengthwise direction, respectively, as shown in Fig. 4.

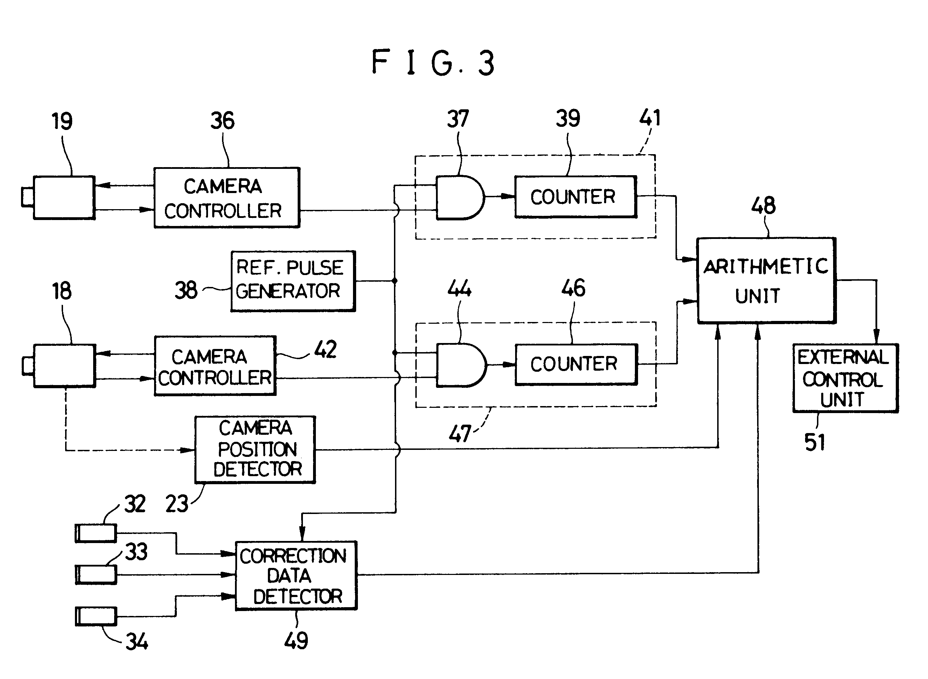

The length measuring apparatus cooperates with a control circuit shown in Fig. 3 having camera controllers 36 and 42 for operating the upstream side and downstream side scanning cameras 18 and 19, respectively. Each camera controller 36, 42 generates drive pulses for driving the CCD array 18a, 19a of the scanning camera 18, 19 so as to output the digital signals of logic "0" or "1" in synchronism with the drive pulses. The camera controllers 36 and 42, upon receiving the logic signals, outputs pulses having pulse widths corresponding to the numbers ($\Delta B$, $\Delta A$) of pixels outputting a signal of logic "1", respectively, which are referred to as sheet length signals to high speed counters 41 and 47, each consisting of AND gate 37, 44 and a counter 39, 46.

The high speed counter 41 receives a sheet length signal from the camera controller 36 and a high frequency of reference clock pulses generated by means of a reference pulse generator 38 through AND gate 37. The counter 39 counts reference clock pulses passed through AND gate 27. The high speed counter 47 is identical in structure and operation to the high speed counter 41 and therefore description need not be made herein.

An arithmetic unit 48 receives signals of the counted values from the high speed counters 41 and 47 to determine the actual sheet length L. For the determination of the actual sheet length L of sheet, the arithmetic unit 48 receives correction data regarding the inclination of a center line of the sheet 12 placed on the conveyer belt 10 with respect to the lengthwise direction from a correction data detector 49 connected to the angle sensor consisting of the three light receiving elements 32-33. The correction data detector 49, which is similar in structure to the high speed counters 41 and 47, is structured to convert timing signals provided from the light receiving elements 32-34 when the sheet 12 crosses over the respective light receiving elements 32-34 into the numbers of reference clock pulses from the reference pulse generator 38. An external control unit 51, which is connected to the arithmetic unit 48, classifies sheets into standard and substandard sheets in accordance with their sheet length determined by the arithmetic unit 48.

In operation of the sheet measuring apparatus structured above, after the distance between the upstream side and downstream side scanning cameras 18 and 19 is adjusted to a desired sheet length $L_0$ by rotating the threaded rotatable rod 26, the conveyer belt 10 is driven to move a sheet 12 in the lengthwise direction. Before both of the upstream side downstream side scanning cameras 18 and 19 detect the sheet 12, or when any side $K_a$, $K_b$ of the sheet 12, front or rear, is out of the field of view $S_a$, $S_b$ of each scanning camera 18, 19, because all of the pixels of the CCD arrays 18a and 19a of the upstream side and downstream side scanning cameras 18 and 19 output signals of logic "1", the arithmetic unit 48 does not initiate its operation.

When the sheet 12 is further moved in the lengthwise direction X, it decreasingly changes the number of pixels of the CCD array 19a of the upstream side scanning camera 19 that output a signal of logic "1" but maintains all of the pixels of the CCD array 18a of the downstream side scanning camera 18 to provide a signal of logic "1". Upon the sheet 12 partly covers the CCD array 18a of the downstream side scanning camera 18 and partly uncovers the the CCD array 19a of the upstream side scanning camera 19, the arithmetic units 48 starts its operation.

As an example, considering the sheet 12 reaches a position shown in Fig. 2 where it uncovers a number $\Delta A$ of pixels of the CCD array 18a of the downstream scanning camera 18 in the field of view $S_a$ and a number $\Delta B$ of pixels of the CCD array 19a of the upstream scanning camera 19 in the field of view $S_b$. Accordingly, at the point, the downstream scanning camera 18 outputs a length signal having a high level of pulse width corresponding to the number $\Delta A$ of signals of logic "1" to AND gate 37 of the high speed counter 41 and opens AND gate until the high level length pulse falls down. Because the reference pulse generator 38 outputs a reference clock pulse to AND gate 37, the counter 39 of the high speed counter 41 counts up the reference clock pulses while AND gate 37 opens. Because the upstream side scanning camera 19 outputs a length signal in the same manner as the downstream side scanning camera 18, the high speed counter 47 counts the number $\Delta B$ of reference clock pulses. The numbers $C_a$ and $C_b$ of pixels of the CCD arrays 18a and 19b covered by the sheet 12 are given as follows:

$$C_a = X_a - \Delta A$$
$$C_b = X_b - \Delta B$$

From the counted numbers $C_a$ and $C_b$ of pixels of the CCD arrays 18a and 19b, distances of the front and rear sides $K_a$ and $K_b$ of the sheet 12 from centers of the fields of view $S_a$ and $S_b$, respectively are calculated. By multiplying the distance by a unit length $\delta d$ relative to the length of one pixel of the CCD array in the lengthwise direction X. Then, the difference D relative to the distance between the centers of the fields of view $S_a$ and $P_b$ is obtained as follows:

$$D = [(C_a + C_b) - (X_a + X_b)/2] \times \delta d.$$

4

A sheet length $L_{D-1}$ at the position is calculated from the difference $\underline{D}$ and a distance between the upstream side and downstream side scanning cameras 18 and 19 that is the desired sheet length $L_0$ as follows:

$$L_{1-1} = L_0 + D$$

The calculation of difference D is repeated N times at various points distributed in the lengthwise direction from when the front side $K_a$ of the sheet 12 comes in the field of view $S_a$ of the downstream scanning camera 18 to when the rear side $K_b$ of the sheet 12 goes out of the field of view $S_b$ of the upstream scanning camera 19. Finally, an apparent sheet length $L_1$ is obtained as an arithmetical mean value of sheet lengths $L_{1-1}$, $L_{1-2}$, $L_{1-3}$, ......., $L_{1-N}$. The apparent sheet length $L_1$ is given by the following equation:

$$L_1 = 1/N \times \sum_{i=1}^{N} (L_{1-1}) \qquad\qquad \ldots\ldots \quad (1)$$

When the sheet 12 does not incline with respect to the direction of movement while it moves in the lengthwise direction, the apparent sheet length $L_1$ is taken as an actual sheet length L. However, if the sheet 12 inclines at an angle with respect to the lengthwise direction X or the center line $X_L$ parallel to the lengthwise direction X and crossing the light receiving element 33 as shown in Fig. 4, an actual sheet length L should be obtained by correcting the apparent sheet length $L_1$ obtained from the operation of the equation (1). An angle of inclination $\theta$ of the sheet 12 is detected by the optical angle sensor consisting of the three sets of the light emitting elements and light receiving elements 28,29,31 and 32-34. That is, the correction data detector 49 is adapted to detect a reversing timing of an output from each light receiving element 32, 33, 34 as the a number of reference clock pulses before the reverse of the output.

Considering that the sheet 12 is placed on the conveyer belt 10 at an angle of inclination $\theta$ with respect to the center line $X_L$ and that a straight line CL connects the centers of the front and rear sides $K_a$ and $K_b$ of the sheet 12, an angle of inclination of the sheet 12 is given by an angle between the lines $X_L$ and CL. When the sheet 12 moves in the lengthwise direction X, the front side $K_a$ of the sheet 12 is detected first by the light receiving element 33 and then, by the light receiving element 32. A time required between the detections of the front side $K_a$ of the sheet 12 by the light receiving elements 33 and 32 is detected as the number of reference clock pulses counted by the correction data generator 49. In the same manner, a time required between the detection of the front side $K_a$ of the sheet 12 by the light receiving elements 32 and 34 is detected as the number of reference clock pulses counted by the correction data generator 49. The counted values $CU_a$ and $CU_b$ of reference clock pulses are output to the arithmetic unit 48.

In the arithmetic unit 48, an arithmetical mean value $CU_x$ of the counted values $CU_a$ and $CU_b$ is calculated as follows:

$$CU_x = (CU_a + CU_b)/2$$

Because of the symmetry of location of the light receiving elements 32 and 34 with respect to center line $X_L$ and the same lengthwise distance $\underline{Y}$ from the light receiving element 33, the mean count value $CU_x$ is proportional to a time required for the sheet 12 to move the distance $\underline{Y}$. Accordingly, a length $\Delta Y$ per count is given as follows:

$$\Delta Y = Y / Cu_x$$

A distance $\underline{A}$ by which the sheet 12 moves from when the light receiving element 32 detects the front side $K_a$ to when the light receiving element 34 detects the front side $K_a$ is given as follows:

$$A = (|CU_a - CU_b|) \times \Delta Y$$

Because the distance $\underline{A}$ depends upon an angle of inclination $\theta$ of the sheet 12, a correction length $\delta c$ is calculated based on the distance $\underline{A}$ from the following relationships:

$$\theta = \tan^{-1}(A/2 \times J)$$
$$\delta c = L_2(1 - \cos\theta)$$

Finally, an actual sheet length L is calculated from the following relationship:

$$L = L_1 - \delta c$$

After the calculation of an actual sheet length $\underline{L}$ either with or without correction, the arithmetic unit 48 effects a comparison of the actual sheet length L with the desired sheet length $L_0$ so as to detect the difference between these sheet lengths L and $L_0$. If the difference is out of an allowable range, the operation unit causes the external control unit 51 to classify the sheet 12 as a substandard sheet and deliver it into a substandard sheet box (not shown).

In addition to detecting the front edge of the sheet in order to calculate the correct the apparent length of the sheet, it is advantageous to detect the rear edge of the sheet for calculating a correction length $\delta c$. It is possible to determine a correction length $\delta c$ based on a time difference between the detections of the edge of the sheet by light receiving elements 32 and 34. This eliminates the light receiving element 33 and the light emitting element 29.

Although the present invention has been fully described by way of the preferred embodiment thereof with reference to the accompanying drawings, it is to be noted that various changes and modifications are apparent to those skilled in the art. Therefore, unless otherwise these changes and modifications depart from the scope of the present invention, they should be construed as included therein.

## Claims

1. A measuring apparatus (1) for measuring a length of a sheet (12) moving at a constant speed in one direction (X), said apparatus (1) comprising:

a front edge detecting means (13, 18) for detecting a front edge ($K_a$) of said sheet (12) to output a front edge signal;

a rear edge detecting means (14, 19) disposed at a distance substantially equal to a desired sheet length ($L_0$) from said front edge detecting means (13, 18) in said one direction (X) for detecting a rear edge ($K_b$) of said sheet (12) to output a rear edge signal;

an inclination detecting means (28, 29, 31, 32, 33, 34) for detecting an inclination angle ($\theta$) of said sheet (12) with respect to said one direction (X) to output an angle signal representitive of said inclination angle; and

a arithmetic means (48) for determining an apparent length ($L_1$) of said sheet (12) in said one direction (X) based on said front and rear edge signals output from said front edge and rear edge detecting means (13, 14, 18, 19) and operating an actual length (L) by correcting said apparent length ($L_1$) with said angle signal from said inclination detecting means (28, 29, 31, 32, 33, 34)

**CHARACTERIZED IN**

that a reference pulse generator (38) is provided for generating a high frequency of reference clock pulses during a period said front edge signal and/or said rear edge signal is detected;

that a high speed counter (41;47) is connected with said reference pulse generator (38) for counting said reference clock pulses; and

that said inclination detecting means (28, 29, 31, 32, 33, 34) comprising three sets of photosensors (28, 32;29, 33;31, 34) arranged at spaces of an equalateral triangle of which a perpendicular bisector of the base is in a line parallel with said one direction (X).

2. A length measuring apparatus as defined in claim 1, wherein each of said front edge and rear edge detecting means (13, 14, 18, 19) comprises a line sensor (18;19) disposed in parallel with said one direction (X) and an image forming lens having an image circle ($S_a$, $S_b$) having a diameter substantially equal to a whole length of said line sensor, said line sensor (18;19) being driven to output a pulse signal having a pulse width representing a ratio of a length of part of said line sensor on which no image of said sheet (12) by said image forming lens to the whole length of said line sensor.

3. A length measuring apparatus as defined in claim 2, wherein said line sensor (18;19) has a plurality of photosensitive elements arranged in a straight line in parallel with said one direction (X).

4. A length measuring apparatus as defined in one of claims 1 to 3, wherein each of said front edge and rear edge detecting means (13, 14, 18, 19) includes an illuminating means (13, 14) disposed on one side of a plane in which said sheet (12) moves.

5. A length measuring apparatus as defined in one of claims 1 to 4, wherein said front edge and rear edge detecting means (13, 14, 18, 19) are shiftable relative to each other in said one direction (X).

6. A length measuring apparatus as defined in one of claims 1 to 5, wherein each said photosensor (28, 32;29,33; 31, 34) consists of a photoelectric element (32;33;34) disposed on one side of a plane in which said sheet moves and a light emitting element (28;29;31) disposed on the other side of said plane.

## Patentansprüche

1. Meßgerät (1) zum Messen einer Länge eines Blattes (12), das sich mit einer konstanten Geschwindigkeit in eine Richtung (X) bewegt, wobei das Gerät (1) aufweist:

eine Vorderkantenerfassungseinrichtung (13, 18) zum Erfassen einer Vorderkante ($K_a$) des Blattes (12) und zum Abgeben eines Vorderkantensignals;

eine Hinterkantenerfassungseinrichtung (14, 19), die in einer Entfernung, die im wesentlichen gleich einer gewünschten Blattlänge ($L_0$) ist, von der Vorderkantenerfassungseinrichtung (13, 18) in der einen Richtung (X) zum Erfassen einer Hinterkante ($K_b$) des Blattes (12) und zum Abgeben eines Hinterkantensignals angeordnet ist;

eine Neigungserfassungseinrichtung (28, 29, 31, 32, 33, 34) zum Erfassen eines Neigungswinkels ($\theta$) des Blattes (12) in bezug auf die eine Richtung (X) und zum Abgeben eines Winkelsignals, das den Neigungswinkel wiedergibt; und

eine Recheneinrichtung (48) zum Bestimmen einer scheinbaren Länge ($L_1$) des Blattes (12) in der einen Richtung (X) aufgrund der Vorder- und Hinterkantensignale, die von den Vorderkanten- und Hinterkantenerfassungseinrichtungen (13, 14, 18, 19) abgegeben werden, und zum Ermitteln einer tatsächlichen Länge (L) durch Korrigieren der scheinbaren Länge ($L_1$) mit dem Winkelsignal von der Neigungserfassungseinrichtung (28, 29, 31, 32, 33, 34);

**dadurch gekennzeichnet**, daß

ein Bezugsimpulsgenerator (38) zum Erzeugen einer hohen Frequenz von Bezugstaktimpulsen während einer Periode der Erfassung des Vorderkantensignals und/oder des Hinterkantensignals vorgesehen ist;

eine Hochgeschwindigkeitszähler (41; 47) mit dem Bezugsimpulsgenerator (38) zum Zählen der Bezugstaktimpulse verbunden ist, und

die Neigungserfassungseinrichtung (28, 29, 31, 32, 33, 34) drei Sätze von Fotofühlern (28, 32; 29, 33; 31, 34), die in Abständen eines gleichseitigen Dreiecks angeordnet sind, von dem eine senkrechte Halbierende auf der Grundseite in einer Geraden parallel zu der einen Richtung (X) verläuft.

2. Längenmeßgerät nach Anspruch 1, wobei jede der Vorderkanten- und Hinterkantenerfassungseinrichtungen (13, 14, 18, 19) einen Linien-Fühler (18; 19), der parallel zu der einen Richtung (X) angeordnet ist, und eine Abbildungslinse aufweist, die einen Bildkreis ($S_a$, $S_b$) hat, der einen Durchmesser im wesentlichen gleich einer Gesamtlänge des Linien-Fühlers hat, wobei der Linien-Fühler (18; 19) angetrieben ist, um ein Impulssignal abzugeben, das eine Impulsbreite hat, die ein Verhältnis einer Länge eines Teils des Linien-Fühlers, auf dem kein Bild des Blattes (12) von der Abbildungslinse gebildet wird, zu der Gesamtlänge des Linien-Fühlers angibt.

3. Längenmeßgerät nach Anspruch 2, wobei der Linien-Fühler (18; 19) eine Vielzahl von fotoempfindlichen Elementen hat, die in einer geraden Linie parallel zu der einen Richtung (X) angeordnet sind.

4. Längenmeßgerät nach einem der Ansprüche 1 bis 3, wobei jede der Vorderkanten- und Hinterkantenerfassungseinrichtung (13, 14, 18, 19) eine Beleuchtungseinrichtung (13, 14) umfaßt, die auf einer Seite einer Ebene angeordnet ist, in der sich das Blatt (12) bewegt.

5. Längenmeßgerät nach einem der Ansprüche 1 bis 4, wobei die Vorderkanten- und Hinterkantenerfassungseinrichtung (13, 14, 18, 19) in der einen Richtung (X) zueinander verschiebbar sind.

6. Längenmeßgerät nach einem der Ansprüche 1 bis 5, wobei jeder Fotofühler (28, 32; 29, 33; 31, 34) aus einem fotoelektrischen Element (32; 33; 34), das auf einer Seite einer Ebene angeordnet ist, in der sich das Blatt bewegt, und aus einem lichtemittierenden Element (28; 29; 31) besteht, das auf der anderen Seite dieser Ebene angeordnet ist.

**Revendications**

1. Appareil de mesure (1) destiné à mesurer la longueur d'une feuille (12) se déplaçant à une vitesse constante dans une première direction (X), ledit appareil (1) comprenant :

un moyen (13, 18) de détection de bord antérieur, servant à détecter le bord antérieur ($K_a$) de ladite feuille (12) afin de délivre: un signal de bord antérieur;

un moyen (14, 19) de détection de bord postérieur, disposé à une distance sensiblement égale à une longueur de feuille voulue ($L_0$) dudit moyen de détection de bord antérieur (13, 18) dans ladite première direction (X) et servant à détecter un bord postérieur ($K_b$) de ladite feuille (12) afin de délivrer un signal de bord postérieur;

un moyen (28, 29, 31, 32, 33, 34) de détection d'inclinaison servant à détecter l'angle d'inclinaison ($\theta$) de ladite feuille (12) par rapport à ladite première direction (X) afin de délivrer un signal d'angle représentatif dudit angle d'inclinaison; et

un moyen arithmétique (48) servant à déterminer la longueur apparente ($L_1$) de ladite feuille (12) dans ladite première direction (X) à partir desdits signaux de bord antérieur et de bord postérieur délivrés par lesdits moyens de détection de bord antérieur et de bord postérieur (13, 14, 18, 19) et à produire une longueur réelle (L) en corrigeant ladite longueur apparente ($L_1$) avec ledit signal d'angle venant dudit moyen de détection d'inclinaison (28, 29, 31, 32, 33, 34);

caractérisé en ce que :

un générateur d'impulsions de référence (38) est prévu pour produire des impulsions d'horloge de référence de haute fréquence pendant la durée où ledit signal de bord antérieur et, ou bien, ledit signal de bord postérieur sont détectés;

un compteur rapide (41; 47) est connecté audit générateur d'impulsions de référence (38) afin de compter lesdites impulsions d'horloge de référence; et

ledit moyen de détection d'inclinaison (28, 29, 31, 32, 33, 34) comprend trois ensemble de photocapteurs (28, 32; 29, 33; 31, 34) disposés aux espacements d'un triangle équilatéral dans lequel une bissectrice perpendiculaire de la base est orientée suivant une ligne parallèle à ladite première direction (X).

2. Appareil de mesure de longueur selon la revendication 1, où chacun desdits moyens de détection de bord antérieur et de bord postérieur (13, 14, 18, 19) comprend un capteur de ligne (18; 19) disposé parallèlement à ladite première direction (X) et une lentille de formation d'image possédant un cercle d'image ($S_a$, $S_b$) de diamètre sensiblement égal à une longueur totale dudit capteur de ligne, ledit capteur de ligne (18; 19) étant excité de façon à délivrer un signal d'impulsions possédant une largeur d'impulsion représentant le rapport de la longueur d'une partie dudit capteur de ligne, sur laquelle il n'y a aucune image de ladite feuille (12) produite par ladite lentille de formation d'image, à la longueur totale dudit capteur de ligne.

3. Appareil de mesure de longueur selon la revendication 2, où ledit capteur de ligne (18; 19) possède plusieurs éléments photosensibles qui sort disposés suivant une ligne droite parallèle à ladite première direction (X).

4. Appareil de mesure de longueur selon l'une quelconque des revendications 1 à 3, où chacun desdits moyens de détection de bord antérieur et de bord postérieur (13, 14, 18, 19) comporte un moyen d'éclairement (13, 14) disposé d'un premier côté du plan dans lequel ladite feuille (12) se déplace.

5. Appareil de mesure de longueur selon l'une quelconque des revendications 1 à 4, où lesdits moyens de détection de bord antérieur et de bord postérieur (13, 14, 18, 19) peuvent être déplacés l'un par rapport à l'autre suivant ladite première direction (X).

6. Appareil de mesure de longueur selon l'une quelconque des revendications 1 à 5, où chacun desdits photocapteurs (28, 32; 29, 33; 31, 34) consiste en un élément photoélectrique (32; 33; 34) disposé d'une premier côté du plan dans lequel ladite feuille se déplace et d'un élément d'émission de lumière (28; 29; 31) disposé de l'autre côté dudit plan.

# F I G . 1

# FIG.2

EP 0 372 209 B1

EP 0 372 209 B1

# F I G. 3

# F I G. 4

# F I G. 5

MEASURING SIGNAL

REFERENCE SIGNAL